# EUROPÄISCHE PATENTSCHRIFT

(11) **EP 3 942 212 B1**
(45) Veröffentlichungstag und Bekanntmachung des Hinweises auf die Patenterteilung: **07.06.2023**
(21) Anmeldenummer: 20710498.5
(22) Anmeldetag: 10.03.2020
(51) Int. Cl.: F16L 37/10

(54) **FITTING MIT SPERRRING ZUM UNLÖSBAREN VERBINDEN MIT MINDESTENS EINEM ROHR**
FITTING HAVING BLOCKING RING FOR PERMANENTLY CONNECTING TO AT LEAST ONE TUBE
RACCORD AVEC BAGUE DE SERRAGE POUR LA CONNEXION INAMOVIBLE AVEC AU MOINS UN TUBE

(30) Priorität: 20.03.2019 DE 102019107130
(43) Veröffentlichungstag der Anmeldung: 26.01.2022
(73) Patentinhaber: Viega Technology GmbH & Co. KG, 57439 Attendorn (DE)
(72) Erfinder: DÜPERTHAL, Fabian, 57368 Lennestadt (DE); ROCKSLOH, Stefan, 57439 Attendorn (DE); SCHNEIDER, Andreas, 57413 Finnentrop-Schönholthausen (DE); SCHMITT, Detlev, 57489 Drolshagen (DE); SINOPLU, Sudi, 57439 Attendorn (DE); HÜTTE, Andreas, 57439 Attendorn (DE)
(74) Vertreter: Cohausz & Florack
(86) Internationale Anmeldenummer: PCT/EP2020/056329
(87) Internationale Veröffentlichungsnummer: WO 2020/187645

(56) Entgegenhaltungen:
- CN-A- 108 953 807
- DE-A1-102015 118 546
- DE-A1-102017 217 176

## Beschreibung

Die Erfindung betrifft ein Fitting zum unlösbaren Verbinden mit mindestens einem Rohr mit einem Grundkörper, mit einem Halteelement, wobei das Halteelement Rastelemente zum Verrasten mit einem korrespondierenden Rastelement des zu verbindenden Rohres aufweist und mit einem Dichtelement.

Der für die vorliegende Erfindung relevante technische Bereich ist die baustellenseitige Installation von Rohrleitungssystemen, bei der allgemein für das Leiten und Führen eines Fluids ein aus Rohrabschnitten und Fittings bestehendes Rohrleitungssystem installiert wird. Als Fitting wird grundsätzlich ein Verbindungsstück einer Rohrleitung verstanden und wird am häufigsten zur Verbindung von zwei oder mehreren Rohrabschnitten eingesetzt. Zu den häufigsten Fittings zählen gerade Verbindungen, Richtungswechsel in Form von Rohrbögen, Reduzierstücke, Abzweige wie T-Stücke oder Kreuzungen. Unter einem Fitting ist aber auch ein Rohranschluss einer Armatur oder einer sonstigen Komponente zu verstehen. Beispielsweise weisen Thermometer oder Manometer als Armaturen nur einen Anschluss für einen Rohrabschnitt auf.

Die zuvor allgemein beschriebenen Rohrleitungssysteme dienen insbesondere einem Transport von Trink- oder Heizungswasser, von Gas zum Betrieb einer Heizungsanlage oder von Industriegasen.

Häufig eingesetzte Rohrwerkstoffe in Trinkwasser- und Sprinkleranwendungen sind harte Kunststoffe wie Ataktisches Polypropylen (PP-R) und Chloriertes Polyvinylchlorid (CPVC). Auch vernetztes Polyethylen (PEX) wird dafür verwendet. Daneben betrifft die Erfindung auch das Verbinden von Metallrohren.

Bei Kunststoffrohren erfolgt die Verbindung von Rohren bzw. Fittings beispielsweise bei PP-R im Schweiß- oder bei CPVC mit Klebeverfahren. Nachteilig ist hierbei vor allem die sehr zeitaufwändige Verarbeitung. Sowohl bei PP-R Schweißverbindern als auch CPVC Klebefittings ist eine intensive Vorbereitung der Fügestelle notwendig. Nachteilig wirken sich weiterhin die großen Kühl- (PP-R) bzw. Auslüftungszeiten (CPVC) aus, bis das System mit Wasser oder einem anderen Fluid beaufschlagt werden kann. Darüber hinaus sind bei der PP-R Verarbeitung teure Schweißmaschinen notwendig und sowohl Schweiß- als auch Klebeprozesse mit Unsicherheiten im späteren Betrieb behaftet.

Neben den beschriebenen Klebe- und Schweißverbindern sind aus dem Stand der Technik auch Steckverbinder bekannt, bei denen keine Vorinstallation und eine Ausrichtung des Systems vor dem Verpressen möglich sind. Zusätzlich sind die beschriebenen Fittings bereits nach dem Einstecken des Rohres dicht. Des Weiteren sind Halbschalenfittings für genutete CPVC Rohre bekannt, jedoch benötigen diese Art Fittings ein teures Werkzeug zum Einbringen von Nuten und sind mehrteilig aufgebaut. Für eine Verbindung werden gelenkig miteinander verbundene Halbschalen um das Rohr herumgelegt und mittels einer klemmenden Verriegelung miteinander verbunden.

Aus der CN 108953807 A ist ein Verbinder für Schläuche mit einem Grundkörper und einer als Sperrring dienenden Schraubkappe aufweisend Verriegelungsmittel bekannt.

Aus der DE 10 2015 118 546 A1 ist eine Befestigungsvorrichtung für Wellrohre mit einem Basiskörper und einem Befestigungselement mit Rasthaken bekannt, wobei das Befestigungselement durch Drehung in einen Verriegelungszustand und wieder zurück in einen Entriegelungszustand bewegt werden kann.

Aus der DE 10 2017 217 176 A1 ist ein Schnellverbinder für Rohre mit einem Hauptkörper und einer Gleitführung bekannt, wobei durch Schieben der Gleitführung über den Hauptkörper und mittels Verriegelungsmitteln ein Rohr in dem Schnellverbinder arretiert und durch Zurückschieben der Gleitführung wieder gelöst werden kann.

Daher liegt der vorliegenden Erfindung das technische Problem zugrunde, einen für das unlösbare Verbinden von Rohren geeigneten Fitting anzugeben, mit dem die aufgezeigten Nachteile zumindest teilweise behoben werden können.

Das zuvor aufgeführte technische Problem wird erfindungsgemäß durch einen eingangs genannten Fitting zum unlösbaren Verbinden mit mindestens einem Rohr dadurch gelöst, dass der Fitting einen Sperrring aufweist, dass der Sperrring über ein Gewinde mit dem Grundkörper verbunden ist, dass der Sperrring in einer ersten axialen Position eine Bewegung des Haltelements in radialer Richtung zulässt und dass der Sperrring in einer zweiten axialen Position eine Bewegung des Haltelements in radialer Richtung nach außen verhindert.

Mittels des erfindungsgemäßen Fittings ist es möglich, ohne zusätzliche Spezialwerkzeuge eine zuverlässige Rohrverbindung in kurzer Zeit herzustellen. Darüber hinaus wird die Installation von Rohrleitungssystemen stark vereinfacht, sodass auch nicht geschultes Personal oder fachfremde Personen Rohrverbindungen vornehmen können.

Aufgrund der Rastelemente des Halteelements, welche Teil des Grundkörpers sein können, verrastet das zu verbindende Rohr beim Einschub in den Fitting vorzugsweise formschlüssig und ist nicht mehr lösbar. Auf diese Weise sind keine zusätzlichen Krallelemente erforderlich. Bei dem korrespondierenden Rastelement des Rohres handelt es sich beispielsweise um eine oder mehrere Nuten, welche außenumfänglich in das Rohr eingebracht sind. In die Nut(en) oder anderweitig gestalteten Merkmale des Rohrs greifen die Rastelemente des Halteelements ein. Durch die Wechselwirkung des Rohrmerkmals mit dem Rastelement des Halteelements ist eine einfache und zuverlässige Einstecktiefenkontrolle gegeben, welche beispielsweise durch einen akustischen Indikator ("einklicken") zusätzlich bestätigt werden kann.

Durch das Eingreifen der Rastelemente ineinander entsteht bereits eine unlösbare Verbindung des Fittings mit dem Rohr, da nur durch eine Beschädigung bzw. Zerstörung der Rastelemente ein Lösen des Fittings möglich ist. Unlösbar verbunden bedeutet also eine Verbindung, die nur mit einer Zerstörung eines Teils des Fittings gelöst werden kann. Gleichwohl wurde erkannt, dass ein zerstörendes Aufbrechen der Verbindung bei zu hohen einwirkenden Kräften weitgehend verhindert werden kann, indem ein Sperrring vorgesehen ist.

Durch das Dichtelement des Fittings wird eine Dichtwirkung erzielt, indem beispielsweise die Außenseite des vorzugsweise angefasten, eingeschobenen Rohres an dem Dichtelement anliegt und das Dichtelement plastisch verformt wird. Durch die Anfasung des Rohres kann eine Beschädigung des Dichtelements bei Einschub des Rohres verhindert werden. Bei dem Dichtelement kann es sich um einen O-Ring, eine Gummilippe oder ein anderes dem Fachmann bekanntes Dichtmittel handeln. Für das Dichtmittel kann eine umfängliche Nut im Grundkörper des Fittings vorgesehen sein.

Beim Einschieben des Rohres befindet sich der Sperrring in der ersten axialen Position, so dass eine Bewegung des Halteelements in radialer Richtung zugelassen wird. Auf diese Weise lassen sich die Rastelemente des Halteelements bei Einschub des Rohres radial nach außen schieben, so dass der Einschub des Rohres ermöglicht wird. Nachdem das Rohr so weit in den Fitting hineingeschoben ist, dass das korrespondierende Rastelement des Rohres mit den Rastelementen des Halteelements verrastet, wobei die Rastelemente des Halteelements eine Bewegung in radial nach innen gerichteter Richtung ausführen, wird der Sperrring von der ersten axialen Position in die zweite axiale Position verschoben. Durch den Sperrring in der zweiten axialen Position wird eine erneute radial nach außen gerichtete Bewegung der Rastelemente des Halteelements verhindert. Der Sperrring verhindert somit, dass die Rastelemente des Halteelements, welche mit dem korrespondierenden Rastelement des Rohres verrastet sind, durch beispielsweise Bewegungen des Rohrleitungssystems, hohen Rohrinnendruck oder andere Einflüsse entrasten. Durch den Sperrring wird insbesondere eine Erhöhung des Berstdrucks der Rohrverbindung ermöglicht.

Der Grundkörper, die Haltelemente und der Sperrring des Fittings sind vorzugsweise aus Kunststoff gefertigt, es sind jedoch auch andere Materialien wie Metalle oder Kombinationen von Werkstoffen für einzelne oder sämtliche Teile des Fittings möglich.

Bei einer bevorzugten Ausführungsform erfolgt die axiale Verschiebung des Sperrrings von der ersten axialen Position zur zweiten axialen Position durch ein Verdrehen des Sperrrings entlang des Gewindes, wobei das Verdrehen um einen Winkel von weniger als 360°, insbesondere weniger als 180°, vorzugsweise weniger als 90° erfolgt.

Dies ermöglicht ein einfaches und effektives Verschieben des Sperrrings von der ersten axialen Position in die zweite axiale Position. Das Verdrehen ist vorzugsweise händisch möglich. Der Sperrring kann darüber hinaus eine äußere Form aufweisen, die mit einer Kontur für den Ansatz eines Werkzeugs, insbesondere mit einer sechs- oder achtkantigen Kontur versehen ist. Somit kann eine manuelle Betätigung des Fittings mit üblichen Werkzeugen erfolgen, sofern eine Betätigung allein mit den Händen nicht möglich sein sollte.

Das Verdrehen des Sperrrings von der ersten axialen Position in die zweite axiale Position, wobei das Verdrehen um einen Winkel von weniger als 360°, insbesondere weniger als 180°, vorzugsweise weniger als 90° erfolgt, vermeidet ein unnötig häufiges Umgreifen beim händischen Verdrehen bzw. ein unnötig häufiges Umsetzen des Werkzeugs beim Verdrehen mittels Werkzeug. Diese Eigenschaft wird durch eine entsprechende Steigung des Gewindes erreicht.

Bei einer weiteren Ausführungsform sind das Halteelement und der Grundkörper integral, also einteilig ausgebildet.

Dies ermöglicht eine zeit- und kosteneffiziente Produktion der Komponenten, welche üblicherweise mittels eines Spritzguss-Verfahrens hergestellt werden. Darüber hinaus erübrigt sich bei integral ausgeführter Bauweise eine Vormontage von Halteelement und Grundkörper. Weiterhin kann eine integrale Bauweise eine höhere Festigkeit der Komponenten bedeuten, da eine Verbindungsstelle immer eine mögliche Schwachstelle birgt.

Es ist allerdings auch eine nicht integrale Bauweise denkbar, bei der der Grundkörper mit dem Halteelement beispielsweise verschraubt, verklebt, verhakt oder anderweitig verbunden wird. Der Zusammenbau von Grundkörper und Halteelement kann in diesem Fall werksseitig erfolgen oder erst kurz vor der Montage des Fittings. Erfindungsgemäß ist die axiale Verschiebung des Sperrrings von der ersten axialen Position in die zweite axiale Position irreversibel.

Dies verhindert ein erneutes Öffnen der Rohrverbindung. Die Erfahrung hat gezeigt, dass ein wiederholtes Schließen und Öffnen von Rohrverbindungen im Baustellenumfeld die Qualität der Rohrverbindung beeinträchtigt. Weiterhin erschwert es unbefugte Eingriffe in ein einmal abgeschlossenes Rohrsystem.

Die Irreversibilität wird erfindungsgemäß durch ein Verriegelungselement ("twist & lock") erreicht, welches in der zweiten axialen Position des Sperrrings zwischen Sperrring und Grundkörper wirkt und unlösbar ist. Auf diese Weise wird ein erneutes Verschieben des Sperrrings von der zweiten axialen Position in die erste axiale Position verhindert. Auch diese Verriegelung kann ein akustisches Signal als Indikator beim Verriegeln erzeugen, welcher eine Verriegelung von Sperrring und Halteelement in der zweiten axialen Position signalisiert. Die zuvor beschriebene Verriegelung führt zu einer Verstärkung der Unlösbarkeit der Verbindung, da der Sperrring erfindungsgemäß nur durch eine teilweise Zerstörung der Verriegelungselemente zurückgedreht werden kann.

Darüber hinaus können farbliche Markierungen vorgesehene sein, welche den Status der Verschiebung des Sperrrings signalisieren. Beispielsweise kann in der zweiten axialen Position des Sperrrings ein grüner Bereich des Grundkörpers sichtbar sein, welche in der ersten axialen Position durch den Sperrring verdeckt ist. Des Weiteren können geometrische Strukturen für eine Anzeige einer Verschiebung des Sperrrings vorgesehen sein, also beispielsweise zwei Rippen, die nach erfolgter Bewegung in der Flucht stehen.

Bei einer weiteren bevorzugten Variante der zuvor genannten Ausführungsform weist der Sperrring mindestens ein Verriegelungsmittel zum Verriegeln mit einem korrespondierenden Verriegelungsmittel am Grundkörper auf. Dadurch kann der Sprengring mittels der Verriegelungsmittel mit dem Grundkörper verriegelt und somit fixiert werden.

Dadurch wird die zuvor beschriebene Irreversibilität der Verschiebung des Sperrrings von der ersten axialen Position in die zweite axiale Position ermöglicht. Die Verriegelungsmittel des Sperrrings sind vorzugsweise derart ausgebildet, dass ein Verschieben von der ersten axialen Position des Sperrrings in die zweite axiale Position nicht behindert wird. Sobald die zweite axiale Position hingegen erreicht ist, werden die Verriegelungsmittel des Sperrrings automatisch aktiviert und eine Verriegelung von Sperrring und Grundkörper erfolgt.

Die Verriegelungsmittel können beispielsweise Schnappmittel am Sperrring sein, welche in der zweiten axialen Position des Sperrrings in korrespondierende Schnappelemente des Grundkörpers oder der Halteelemente einschnappen und unlösbar sind.

Bei einer weiteren Ausführungsform weist der Grundkörper einen Anschlag für den Sperrring an der dem Rohreinschub abgewandten Seite des Gewindes auf, wobei die gegenüberliegenden Stirnseiten des Anschlags und des Sperrrings wellenförmig ausgebildet sind und die Wellenform der Stirnseiten mit der Steigung des Gewindes korrespondiert.

Durch die übereinstimmende Wellenform der Stirnseiten des Anschlags und des Sperrrings und der Steigung des Gewindes wird beim Verdrehen des Sperrrings zusätzlich zur Kraftübertragung über das Gewinde eine gleichwirkende Kraft durch die Wellenform der Stirnseiten übertragen. Mit anderen Worten wird das Gewinde durch die Wellenform der Stirnseiten zusätzlich entlastet. Dies kann insbesondere bei sehr steilen Gewindegängen, wie sie für das Verschieben des Sperrrings von der ersten axialen Position in die zweite axiale Position bei einer Drehung von weniger als 90° nötig sind, für eine bessere Funktionalität und Stabilität sorgen.

Bei einer weiteren Ausführungsform stehen in der ersten axialen Position die Wellentäler der Stirnseite des Anschlags den Wellenbergen der Stirnseite des Sperrrings gegenüber und in der zweiten axialen Position stehen die Wellentäler der Stirnseite des Anschlags den Wellentälern der Stirnseite des Sperrrings gegenüber.

Dies ermöglicht einen optischen Hinweis auf den Status der Verschiebung des Sperrrings und damit auf den Verriegelungszustand der Rohrverbindung. Beispielsweise kann in der zweiten axialen Position des Sperrrings ein grüner Bereich des Grundkörpers sichtbar sein, welche in der ersten axialen Position durch den Sperrring verdeckt ist, da in der ersten axialen Position die Wellentäler der Stirnseite des Anschlags den Wellenbergen der Stirnseite des Sperrrings gegenüberstehen und somit bündig miteinander abschließen. In diesem Beispiel würde die Sichtbarkeit des grünen Bereichs oder eines Bereiches mit einer geometrischen Struktur signalisieren, dass sich der Sperrring in der zweiten axialen Position befindet und die die Rohrverbindung somit verriegelt ist.

Darüber hinaus wird durch die übereinstimmende Wellenform der Stirnseiten des Anschlags und des Sperrrings und den Stellungen der Wellentäler und Wellenberge in den entsprechenden axialen Positionen des Sperrrings erreicht, dass der Fitting im Auslieferungszustand, sprich Sperrring in erster axialer Position, verbleibt, bis der Sperrring bewusst in die zweite axiale Position verschoben wird. Mit anderen Worten verhindert die übereinstimmende Wellenform eine unbeabsichtigte Verschiebung des Sperrrings von der ersten axialen Position in die zweite axiale Position, beispielsweise beim Transport, was den Fitting im Falle einer oben beschriebenen irreversiblen ausgestalteten Ausführungsform unbrauchbar machen würde.

Im Folgenden wird die Erfindung anhand von Ausführungsbeispielen mit Bezug auf die Zeichnung erläutert. In der Zeichnung zeigen
- Fig. 1a-b: zwei Darstellungen eines erfindungsgemäßen Fitting mit einem zu verbindenden Rohr zur Verdeutlichung der Sperrringposition,
- Fig. 2: den Grundkörper des in Fig. 1 gezeigten Fittings in perspektivischer Ansicht,
- Fig. 3: den Sperrring des in Fig. 1 gezeigten Fittings in perspektivischer Ansicht,
- Fig. 4: den Fitting nach Fig. 1 im Querschnitt entlang der Linie IV-IV in Fig. 1a ohne Rohr,
- Fig. 5a-c: drei Darstellungen des Fittings nach Fig. 1 mit einem zu verbindenden Rohr im Querschnitt entlang der Linie V-V in Fig. 1a
- Fig. 6a-b: zwei Darstellungen eines erfindungsgemäßen Fittings mit einem zu verbindenden Rohr in Seitenansicht
- Fig. 7a-b: zwei Darstellungen des Fittings nach Fig. 6a-b im Querschnitt entlang der Linie VIIA-VIIA in Fig. 6a bzw. VIIB-VIIB in Fig. 6b

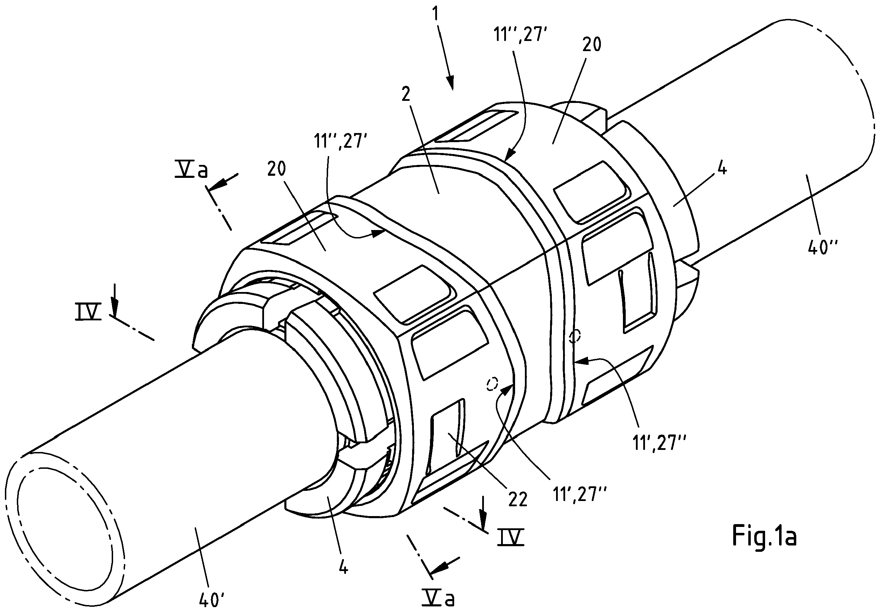

Fig. 1a-b zeigen jeweils eine perspektivische Darstellung eines erfindungsgemäßen Fittings 1 zum unlösbaren Verbinden mit mindestens einem Rohr 40' ,40", wobei der Fitting 1 einen Grundkörper 2, ein Halteelement 4, welches Rastelemente 6 zum Verrasten mit einem korrespondierenden Rastelement 42 des zu verbindenden Rohres 40' ,40" aufweist, ein Dichtelement 8 und einen Sperrring 20 aufweist, wobei der Sperrring 20 über ein Gewinde 24 mit dem Grundköper 2 verbunden ist, der Sperrring 20 in einer ersten axialen Position eine Bewegung des Haltelements 4 in radialer Richtung zulässt und der Sperrring 20 in einer zweiten axialen Position eine Bewegung des Haltelements 4 in radialer Richtung nach außen verhindert.

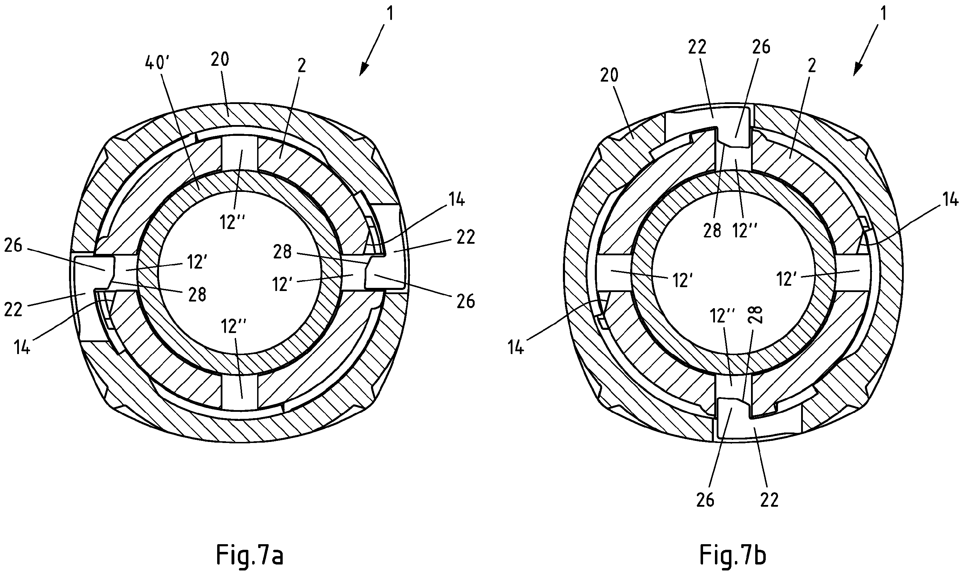

Das Rohr 40' ,40" weist in dieser Ausführungsform als korrespondierendes Rastelement 42 zum Verrasten mit den Rastelementen 6 des Halteelements 4 eine Nut auf. Weiterhin sind in Fig. 1a-b Verriegelungsmittel 22 des Sperrrings 20 zum Verriegeln mit einem korrespondierenden Verriegelungsmittel 12 am Grundkörper 2 sichtbar (in Fig. 7a-b explizit gezeigt).

Der Grundkörper 2 weist einen Anschlag 10 für den Sperrring 20 an der dem Rohreinschub abgewandten Seite des Gewindes 24 auf, wobei die gegenüberliegenden Stirnseiten 11', 11", 27', 27" des Anschlags 10 und des Sperrrings 20 wellenförmig ausgebildet sind und die Wellenform der Stirnseiten 11', 11", 27', 27" mit der Steigung des Gewindes 24 korrespondiert.

Fig. 1a zeigt den Fitting 1, wobei der Sperrring 20 in der ersten axialen Position positioniert ist. In dieser Position erfolgt der Einschub eines Rohrs 40' ,40", wobei die Rastelemente 6 des Halteelements 4 in radialer Richtung nach außen gedrückt werden. Die Stirnseiten 11', 11", 27', 27" des Anschlags 10 und des Sperrrings 20 sind derart angeordnet, dass jeweils ein Wellenberg 27" des Sperrrings 20 einem Wellental 11' des Anschlags 10 und ein Wellental 27' des Sperrrings 20 einem Wellenberg 11" des Anschlags 10 gegenüberliegen.

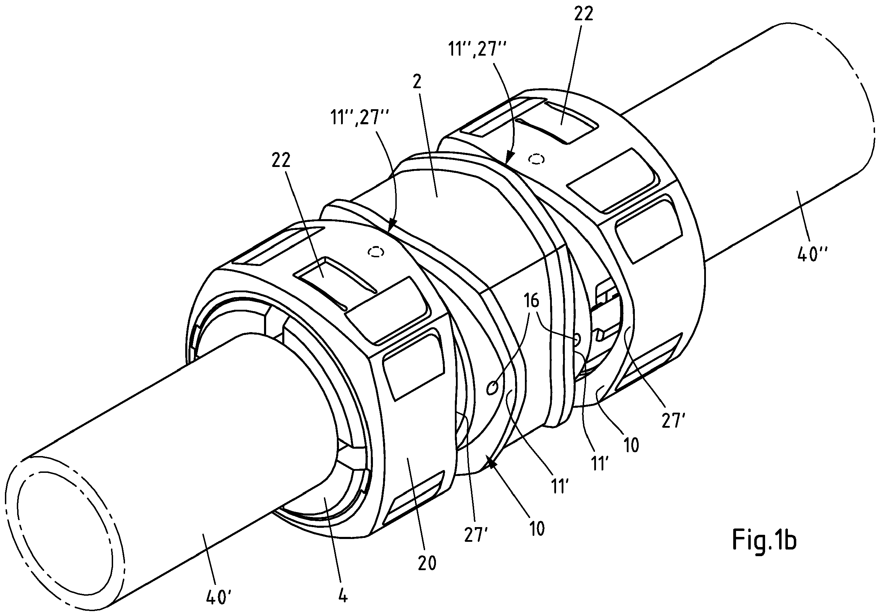

Fig. 1b zeigt den Fitting 1 nachdem die Rastelemente 6 des Halteelements 4 mit dem korrespondierenden Rastelement 42 des Rohrs 40' ,40" verrastet sind. Während dieses Verrastens kann es vorgesehen sein, dass die Rastelemente 6 des Halteelements 4 ein akustisches Signal verursachen, welches die vollzogene Verriegelung der Rastelemente 6 des Halteelements 4 mit dem korrespondierenden Rastelement 42 des Rohrs 40' ,40" anzeigt.

Darüber hinaus ist in der Fig. 1b der Sperrring 20 durch Verdrehen um einen Winkel von 90° von der ersten axialen Position in die zweite axiale Position entlang des Gewindes 24 verschoben worden. Eine Bewegung der Rastelemente 6 des Halteelements 4 in radial nach außen gerichteter Richtung wird in dieser Position durch den Sperrring 20 verhindert. Die Stirnseiten 11', 11", 27', 27" des Anschlags 10 und des Sperrrings 20 sind derart angeordnet, dass jeweils ein Wellenberg 27" des Sperrrings 20 einem Wellenberg 11" des Anschlags 10 und ein Wellental 27' des Sperrrings 20 einem Wellental 11' des Anschlags 10 gegenüberliegen. Zwischen den jeweiligen Wellentälern 11`, 27' des Anschlags 10 und des Sperrrings 20 wird eine Fläche des Grundkörpers 2 sichtbar, welche eine farbliche Markierung als Indikator für den Status der Verschiebung des Sperrrings 20 aufweisen kann.

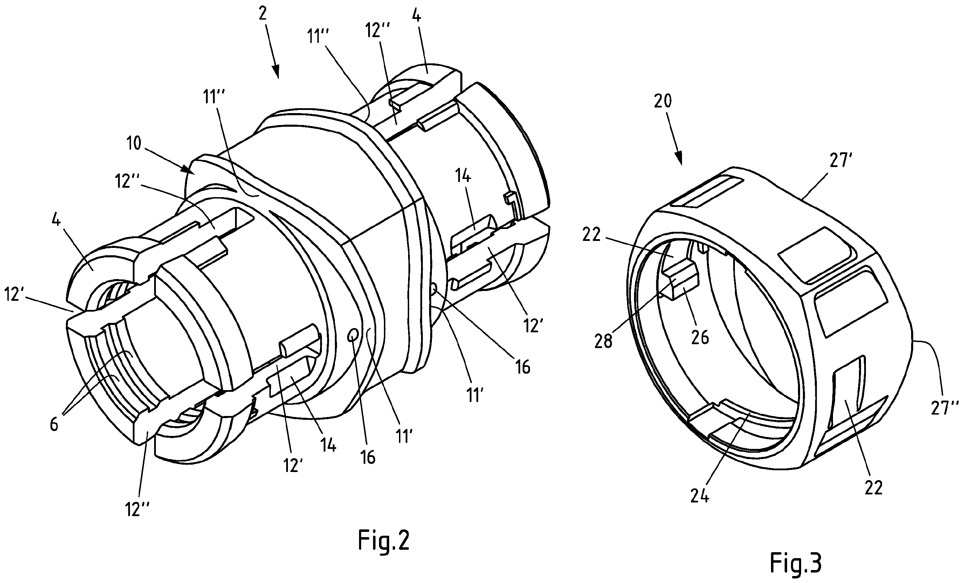

Fig. 2 zeigt eine perspektivische Darstellung des Grundkörpers 2. In dieser Darstellung ist das Verriegelungsmittel 12' am Grundkörper 2 zur Verriegelung mit dem Verriegelungsmittel 22 des Sperrrings 20 sichtbar. Bei den korrespondierenden Verriegelungsmitteln 12" am Grundkörper 2 handelt es sich um rechteckige Aussparungen 12', 12", in welche die Verriegelungsmittel 22 des Sperrrings 20 in der zweiten axialen Position des Sperrrings 20 einrasten.

Weiterhin ist der Anschlag 10 des Grundkörpers 2 für den Sperrring 20 inklusive der bereits beschriebenen Wellentäler 11' und Wellenberge 11" der Stirnseiten des Anschlags 10 dargestellt.

Fig. 3 zeigt eine perspektivische Darstellung des Sperrrings 20. Zu erkennen ist das Gewinde 24, über das der Sperrring 20 mit dem Grundkörper 2 verbunden ist. Darüber hinaus ist das Verriegelungsmittel 22 des Sperrrings 20 sichtbar. Das Verriegelungsmittel 22 des Sperrrings 20 wird durch zwei Rastnasen 26 mit einer Schräge 28 gebildet, welche in der zweiten axialen Position des Sperrrings 20 mit dem korrespondierenden Verriegelungsmittel 12 am Grundkörper 2 einrasten.

Weiter sind in Fig. 3 die bereits beschriebenen Wellentäler 27' und Wellenberge 27" der Stirnseiten des Sperrrings 20 dargestellt.

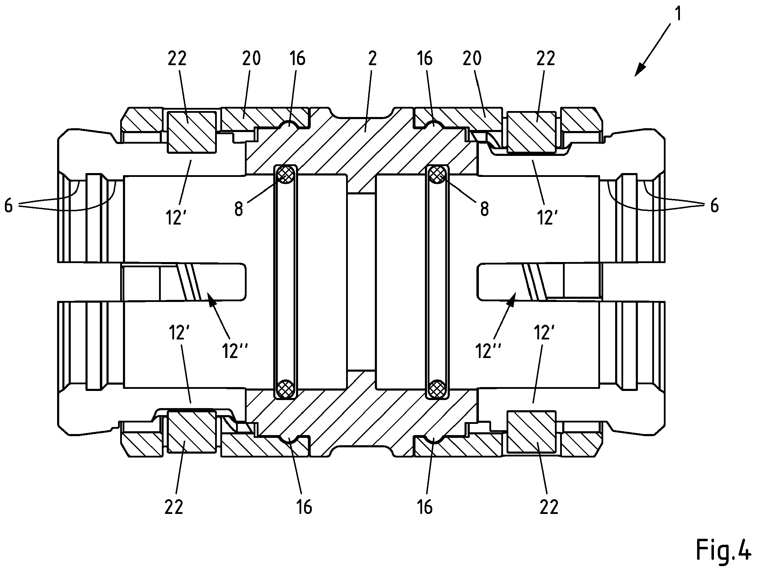

Fig. 4 zeigt den Fitting 1 aus Fig. 1 im Querschnitt entlang der Linie IV-IV in Fig. 1a ohne Rohr 40' ,40". Gezeigt ist die kantige Form der Rastelemente 6 des Halteelements 4, was eine stabile Verbindung bei Verrastung mit dem korrespondierenden Rastelement 42 des Rohrs 40`,40" ermöglicht.

Zusätzlich zu den bereits beschriebenen Merkmalen ist das in eine Nut des Grundkörpers 2 eingelassene Dichtmittel 8 abgebildet. In diesem Beispiel entspricht das Dichtmittel 8 einem O-Ring.

Darüber hinaus ist eine halbkugelförmige Erhebung 16 des Grundkörpers 2 vorgesehen, welche in der ersten axialen Position des Sperrrings 20 in eine entsprechende Aussparung im Sperrring 20 eingreift. Dieses Eingreifen der halbkugelförmigen Erhebung 16 unterstützt, dass der Fitting 1 im Auslieferungszustand, sprich Sperrring 20 in erster axialer Position, verbleibt, bis der Sperrring 20 bewusst in die zweite axiale Position verschoben wird. Mit anderen Worten unterstützt das Eingreifen der halbkugelförmigen Erhebung 16 eine unbeabsichtigte Verschiebung des Sperrrings 20 von der ersten axialen Position in die zweite axiale Position, beispielsweise beim Transport, was den Fitting 1 unbrauchbar machen würde.

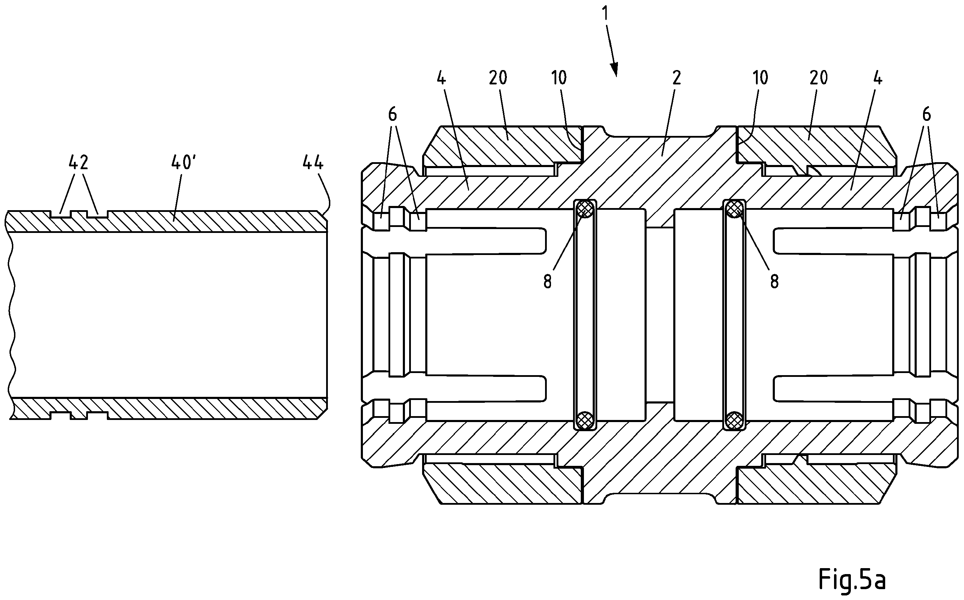

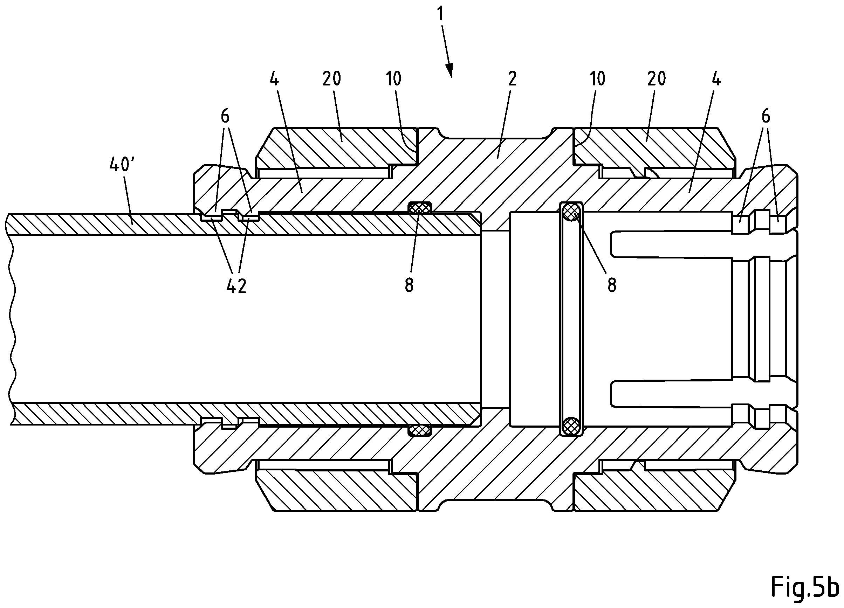

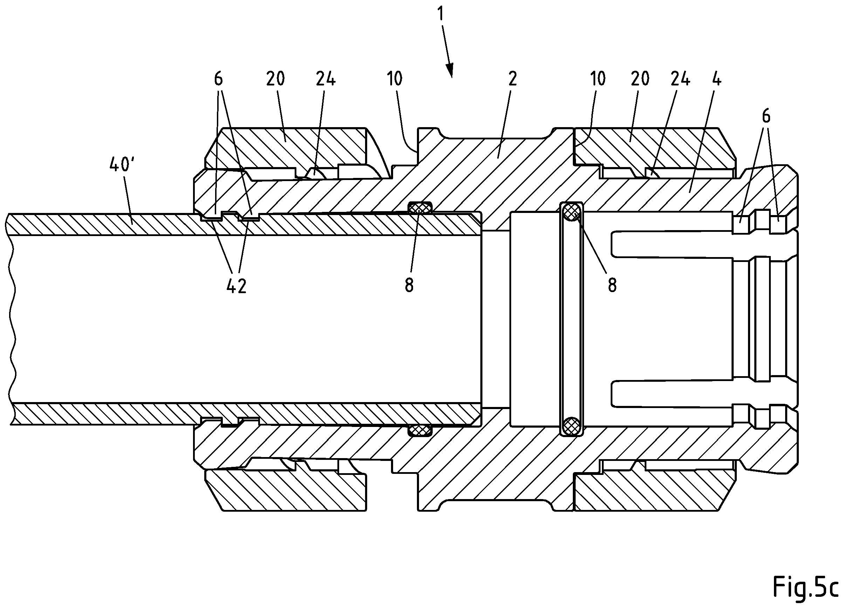

Fig. 5a-c zeigen drei Darstellungen des Fittings nach Fig. 1 mit einem zu verbindenden Rohr 40' im Querschnitt entlang der Linie V-V in Fig. 1a. Von Fig. 5a über Fig. 5b nach Fig.5c ist dargestellt, wie der Prozess des unlösbaren Verbindens des Fittings 1 mit mindestens einem Rohr 40' abläuft.

Fig. 5a zeigt wie ein mit zwei Nuten als korrespondierende Rastelemente 42 des Rohrs 40' versehenes Rohr 40' zum Fitting 1 positioniert wird. Die dem Fitting 1 zugewandte Stirnseite des Rohrs 40' weist dabei eine Anfasung 44 auf, damit das Dichtelement 8 des Fittings 2 in Form eines O-Rings beim Einschieben des Rohrs 40' in den Fitting 2 nicht beschädigt wird. Der Sperrring 20 befindet sich in der ersten axialen Position, welche eine radiale Bewegung der Rastelemente 6 zulässt. Die Rastelemente 6 des Halteelements 4 werden bei Einschub des Rohrs 40' radial nach außen gedrückt.

Fig. 5b zeigt das in den Fitting 1 eingeschobene Rohr 40'. Die Rastelemente 6 des Halteelements 4 sind dabei in die korrespondierende Rastelemente 42 des Rohrs 40' eingerastet. Das Dichtelement 8 ist oval verformt und dichtet mit der Außenwand des eingeschobenen Rohrs 40' ab. Die Rohrverbindung ist in diesem Zustand bereits dicht und aufgrund der Verrastung der Rastelemente 6 des Halteelements 4 und dem korrespondierenden Rastelement 42 des Rohrs 40' verbunden und nicht mehr lösbar.

Fig. 5c zeigt den Fitting 1 und das eingeschobene Rohr 40' nach vollständig abgeschlossener Verbindung von Fitting 1 und Rohr 40'. Der Sperrring 20 wurde durch ein Verdrehen entlang des Gewindes 24 in die zweite axiale Position verschoben. Durch das Verschieben des Sperrrings 20 in die zweite axiale Position wird eine erneute radial nach außen gerichtete Bewegung der Rastelemente 6 des Halteelements 4 verhindert. Die Rastelemente 6 des Halteelements 4, welche mit dem korrespondierenden Rastelement 42 des Rohres 40' verrastet sind, können beispielsweise durch Bewegungen des Rohrleitungssystems, hohen Rohrinnendruck oder andere Einflüsse entrasten, wenn der Sperrring 20 nicht geschlossen worden ist.

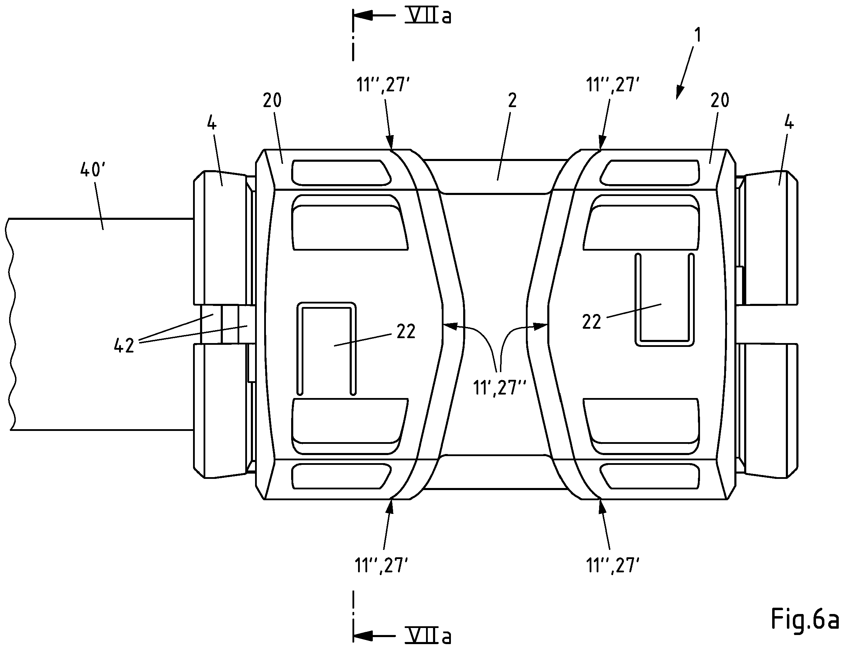

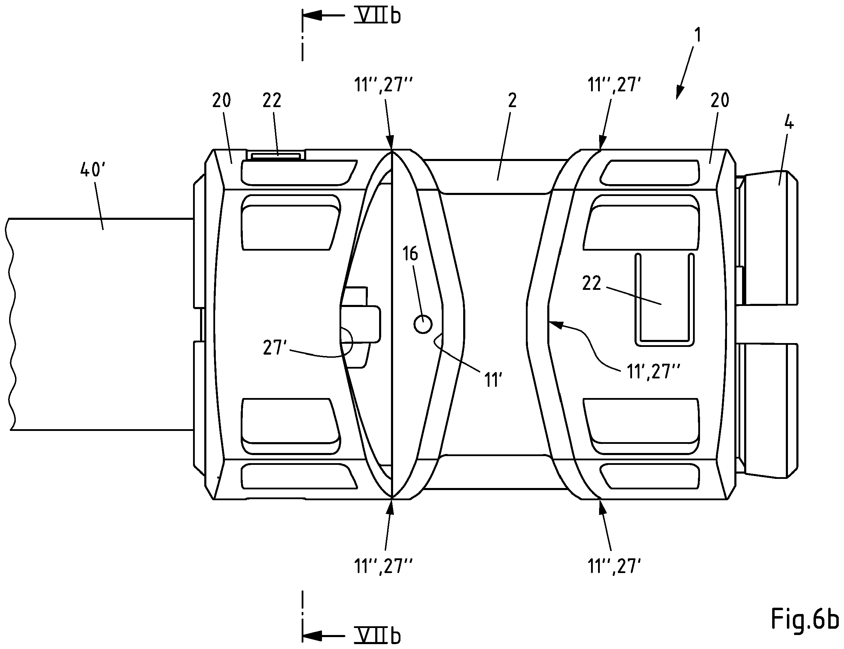

Fig. 6a-b zeigen zwei Darstellungen eines erfindungsgemäßen Fittings 1 mit einem zu verbindenden Rohr 40' in einer Seitenansicht. Insbesondere die in Fig. 1a-b beschriebene Funktion und Wirkung der Stirnseiten 11', 11", 27', 27" des Anschlags 10 und des Sperrrings 20 werden verdeutlicht. Fig. 6a zeigt dabei die Seitenansicht der aus Fig. 1a bekannten Situation, während Fig. 6b analoges für Fig. 1b zeigt.

Fig. 7a-b zeigen zwei Darstellungen des Fittings nach Fig. 6a-b im Querschnitt entlang der Linie VIIA-VIIA in Fig. 6a bzw. VIIB-VIIB in Fig. 6b. Diese Ausführungsform beschreibt die Irreversibilität der axialen Verschiebung des Sperrrings 20 von der ersten axialen Position in die zweite axiale Position aufgrund eines Verriegelungsmittels 22 des Sperrrings 20 zum Verriegeln mit einem korrespondierenden Verriegelungsmittel 12 am Grundkörper 2. Es handelt sich dabei um einen sogenannten "twist & lock" Mechanismus.

Fig. 7a zeigt den Fitting 1 im Querschnitt, wobei sich der Sperrring 20 in der ersten axialen Position befindet. Die Verriegelungsmittel 22 des Sperrrings 20 sind in diesem Beispiel in Form von Rastnasen 26 ausgebildet, und die korrespondierenden Verriegelungsmittel 12 am Grundkörper 2 sind in Form von Aussparungen 12', 12" ausgebildet. Die Rastnasen 26 der Verriegelungsmittel 22 weisen eine Schräge 28 auf, welche beim Verdrehen des Sperrrings 20 entgegen dem Uhrzeigersinn über eine korrespondierende Schräge 14 der Aussparung 12' aus den Aussparungen 12' herausgleiten. Ein Verschieben des Sperrrings 20 von der ersten axialen Position in die zweite axiale Position über ein Verdrehen des Sperrrings 20 entlang des Gewindes 24 ist somit möglich.

Fig. 7b zeigt den Fitting 1 im Querschnitt, wobei sich der Sperrring 20 in der zweiten axialen Position befindet. Die Verriegelungsmittel 22 in Form von Rastnasen 26 sind in die korrespondierenden Verriegelungsmittel 12 in Form von Aussparungen 12" eingeschnappt. Ein Verdrehen in die ursprüngliche erste axiale Position des Sperrrings 20 in Richtung des Uhrzeigersinns ist nicht möglich, da entsprechende Schrägen 14, 28 an Aussparung 12', 12" und Rastnase 26 fehlen. Auch ein weiteres Verdrehen gegen den Uhrzeigersinn ist nicht möglich, da die Aussparung 12" keine Schräge 14 aufweist. Der Sperrring 20 ist somit irreversibel in der zweite axialen Position verrastet und verhindert wie oben beschrieben eine erneute radial nach außen gerichtete Bewegung der Rastelemente 6 des Halteelements 4.

## Patentansprüche

1. Fitting zum Verbinden mit mindestens einem Rohr,
- mit einem Grundkörper (2),
- mit einem Halteelement (4), wobei das Halteelement (4) Rastelemente (6) zum Verrasten mit einem korrespondierenden Rastelement (42) des zu verbindenden Rohres aufweist und
- mit einem Dichtelement (8),
- wobei der Fitting einen Sperrring (20) aufweist,
- wobei der Sperrring (20) in einer ersten axialen Position eine Bewegung des Haltelements (4) in radialer Richtung zulässt und
- wobei der Sperrring (20) in einer zweiten axialen Position eine Bewegung des Haltelements (4) in radialer Richtung nach außen verhindert,
**dadurch gekennzeichnet,**
- **dass** die axiale Verschiebung des Sperrrings (20) von der ersten axialen Position in die zweite axiale Position irreversibel ist,
- wobei die Irreversibilität durch ein Verriegelungselement erreicht wird, welches in der zweiten axialen Position des Sperrrings (20) zwischen Sperrring (20) und Grundkörper (2) wirkt und unlösbar ist, und
- wobei der Sperrring (10) nur durch eine teilweise Zerstörung des Verriegelungselementes zurückgedreht werden kann.

2. Fitting nach Anspruch 1,
**dadurch gekennzeichnet,**
**dass** der Sperrring (20) über ein Gewinde (24) mit dem Grundköper (2) verbunden ist,

3. Fitting nach Anspruch 2,
**dadurch gekennzeichnet,**
**dass** die axiale Verschiebung des Sperrrings (20) von der ersten axialen Position zur zweiten axialen Position durch ein Verdrehen des Sperrrings (20) entlang des Gewindes (24) erfolgt, wobei das Verdrehen um einen Winkel von weniger als 360°, insbesondere weniger als 180°, vorzugsweise weniger als 90° erfolgt.

4. Fitting nach einem der Ansprüche 1 bis 3,
**dadurch gekennzeichnet,**
**dass** das Halteelement (4) und der Grundkörper (2) integral ausgebildet sind.

5. Fitting nach Anspruch 4,
**dadurch gekennzeichnet,**
**dass** der Sperrring (20) mindestens ein Verriegelungsmittel (22) zum Verriegeln mit einem korrespondierenden Verriegelungsmittel (12) am Grundkörper (2) aufweist.

6. Fitting nach Anspruch 5,
**dadurch gekennzeichnet,**
**dass** das Verriegelungsmittel (22) beim Verriegeln mit dem korrespondierenden Verriegelungsmittel (12) am Grundkörper (2) ein akustisches Signal erzeugt..

7. Fitting nach einem der Ansprüche 1 bis 6,
**dadurch gekennzeichnet,**
- **dass** der Grundkörper (2) einen Anschlag (10) für den Sperrring (20) an der dem Rohreinschub abgewandten Seite des Gewindes (24) aufweist,
- **dass** die gegenüberliegenden Stirnseiten (11', 11", 27', 27") des Anschlags (10) und des Sperrrings (20) wellenförmig ausgebildet sind und
- **dass** die Wellenform der Stirnseiten (11', 11", 27', 27") mit der Steigung des Gewindes (24) korrespondiert.

8. Fitting nach Anspruch 7,
**dadurch gekennzeichnet,**
- **dass** in der ersten axialen Position die Wellentäler der Stirnseite (11`) des Anschlags (10) den Wellenbergen der Stirnseite (27") des Sperrrings (20) gegenüberstehen und
- **dass** in der zweiten axialen Position die Wellentäler der Stirnseite (11') des Anschlags (10) den Wellentälern der Stirnseite (27') des Sperrrings (20) gegenüberstehen.

## Claims

1. Fitting for connection to at least one pipe,
- with a base body (2),
- with a retaining element (4), the retaining element (4) having latching elements (6) for latching with a corresponding latching element (42) of the pipe to be connected, and
- with a sealing element (8),
- wherein the fitting has a locking ring (20),
- wherein the locking ring (20) in a first axial position allows a movement of the retaining element (4) in radial direction and
- wherein the locking ring (20) in a second axial position prevents a movement of the retaining element (4) in the outwards radial direction,
**characterised in**
- **that** the axial displacement of the locking ring (20) from the first axial position to the second axial position is irreversible,
- wherein the irreversibility is achieved by a locking element which acts in the second axial position of the locking ring (20) between the locking ring (20) and the base body (2) and is non-releasable, and
- wherein the locking ring (10) can only be turned back by a partial destruction of the locking element.

2. Fitting according to claim 1,
**characterised in**
**that** the locking ring (20) is connected to the body (2) via a thread (24).

3. Fitting according to claim 2,
**characterized in**
**in that** the axial displacement of the locking ring (20) from the first axial position to the second axial position is effected by twisting the locking ring (20) along the thread (24), the twisting being effected through an angle of less than 360°, in particular less than 180°, preferably less than 90°.

4. Fitting according to one of the claims 1 to 3,
**characterised in**
**that** the retaining element (4) and the base body (2) are integrally formed.

5. Fitting according to one of the claims 1 to 4,
**characterized in**
**that** the locking ring (20) comprises at least one locking means (22) for locking with a corresponding locking means (12) on the base body (2).

6. Fitting according to claim 5,
**characterised in**
**that** the locking means (22) generates an acoustic signal when locking with the corresponding locking means (12) on the base body (2).

7. Fitting according to one of the claims 1 to 6,
**characterised in**
- **that** the base body (2) has a stop (10) for the locking ring (20) on the side of the thread (24) facing away from the tube insertion,
- **that** the opposite end faces (11', 11", 27', 27") of the stop (10) and of the locking ring (20) are of undulating design, and
- **that** the waveform of the end faces (11', 11", 27', 27") corresponds to the pitch of the thread (24).

8. Fitting according to claim 7,
**characterised in**
- **that**, in the first axial position, the wave troughs of the end face (11') of the stop (10) are opposite the wave crests of the end face (27") of the locking ring (20), and
- **that**, in the second axial position, the troughs of the end face (11') of the stop (10) are opposite the troughs of the end face (27') of the locking ring (20).

## Revendications

1. Raccord pour raccordement avec au moins un tube,
- avec un corps de base (2),
- avec un élément de maintien (4), l'élément de maintien (4) présentant des éléments d'encliquetage (6) pour encliquetage avec un élément d'encliquetage correspondant (42) du tube à raccorder et
- avec un élément d'étanchéité (8),
- le raccord présentant un anneau de blocage (20),
- l'anneau de blocage (20) autorisant, dans une première position axiale, un mouvement de l'élément de maintien (4) dans la direction radiale et
- l'anneau de blocage (20) empêchant, dans une deuxième position axiale, un mouvement de l'élément de maintien (4) dans la direction radiale vers l'extérieur,
**caractérisé**
- **en ce que** le déplacement axial de l'anneau de blocage (20) de la première position axiale à la deuxième position axiale est irréversible,
- l'irréversibilité étant obtenue par un élément de verrouillage qui, dans la deuxième position axiale de l'anneau de blocage (20), agit entre l'anneau de blocage (20) et le corps de base (2) et est indissociable, et
- l'anneau de blocage (10) ne pouvant être tourné en sens inverse que par une destruction partielle de l'élément de verrouillage.

2. Raccord selon la revendication 1,
**caractérisé en ce que** l'anneau de blocage (20) est relié au corps de base (2) par un filetage (24).

3. Raccord selon la revendication 2,
**caractérisé en ce que** le déplacement axial de l'anneau de blocage (20) de la première position axiale à la deuxième position axiale s'effectue par une rotation de l'anneau de blocage (20) le long du filetage (24), la rotation s'effectuant selon un angle inférieur à 360°, en particulier inférieur à 180°, de préférence inférieur à 90°.

4. Raccord selon l'une des revendications 1 à 3,
**caractérisé en ce que** l'élément de maintien (4) et le corps de base (2) sont formés de manière intégrale.

5. Raccord selon la revendication 4,
**caractérisé en ce que** l'anneau de blocage (20) comporte au moins un moyen de verrouillage (22) pour verrouiller avec un moyen de verrouillage correspondant (12) au niveau du corps de base (2).

6. Raccord selon la revendication 5,
**caractérisé en ce que** le moyen de verrouillage (22) génère un signal acoustique lors du verrouillage avec le moyen de verrouillage correspondant (12) au niveau du corps de base (2).

7. Raccord selon l'une des revendications 1 à 6,
**caractérisé**
- **en ce que** le corps de base (2) présente une butée (10) pour l'anneau de blocage (20) au niveau du côté du filetage (24) faisant dos à l'insertion du tube,
- **en ce que** les faces frontales (11', 11", 27', 27") de la butée (10) et de l'anneau de blocage (20) se faisant face sont ondulées et
- **en ce que** la forme ondulée des faces frontales (11', 11", 27', 27") correspond au pas du filetage (24).

8. Raccord selon la revendication 7,
**caractérisé**
- **en ce que**, dans la première position axiale, les creux d'onde de la face frontale (11') de la butée (10) font face aux crêtes d'onde de la face frontale (27") de l'anneau de blocage (20), et
- **en ce que**, dans la deuxième position axiale, les creux d'onde de la face frontale (11') de la butée (10) font face aux creux d'onde de la face frontale (27') de l'anneau de blocage (20).
